# EUROPÄISCHE PATENTSCHRIFT

(11) **EP 2 384 371 B1**
(45) Veröffentlichungstag und Bekanntmachung des Hinweises auf die Patenterteilung: **17.08.2016**
(21) Anmeldenummer: 10701126.4
(22) Anmeldetag: 14.01.2010
(51) Int. Cl.: C21B 5/00, C21B 3/00, C21B 7/16, C21B 11/00, F27D 17/00, C21B 13/14, C21B 13/00

(54) **VERFAHREN UND ANLAGE ZUR HERSTELLUNG VON ROHEISEN ODER FLÜSSIGEN STAHLVORPRODUKTEN**
METHOD AND SYSTEM FOR PRODUCING PIG IRON OR FLUID STEEL PRE-PRODUCTS
PROCÉDÉ ET INSTALLATION DE PRODUCTION DE FER BRUT OU DE SEMIPRODUITS EN ACIER LIQUIDE

(30) Priorität: 30.01.2009 AT 1642009
(43) Veröffentlichungstag der Anmeldung: 09.11.2011
(73) Patentinhaber: Primetals Technologies Austria GmbH, 4031 Linz (AT)
(72) Erfinder: MILLNER, Robert, A-3382 Loosdorf (AT)
(74) Vertreter: Metals@Linz
(86) Internationale Anmeldenummer: PCT/EP2010/050374
(87) Internationale Veröffentlichungsnummer: WO 2010/086229

(56) Entgegenhaltungen:
- EP-A2- 0 488 429
- WO-A1-2006/075977
- WO-A1-2009/146982
- WO-A1-2010/006905
- AT-B- 406 485
- DE-A1-102006 048 600
- DE-A1-102006 048 601

## Beschreibung

Die Erfindung betrifft ein Verfahren und eine Anlage zur Herstellung von Roheisen oder flüssigen Stahlvorprodukten, wobei metallhaltige, insbesondere eisenoxidhältige, Einsatzstoffe und gegebenenfalls Zuschlagsstoffe in einer Reduktionszone mittels eines Reduktionsgases zumindest teilweise reduziert, in weiterer Folge in eine Schmelzzone eingebracht und unter Zufuhr von Kohlenstoffträgern, insbesondere Koks und/oder Kohle, und sauerstoffhältigem Gas und unter Bildung des Reduktionsgases erschmolzen werden, wobei das gebildete Reduktionsgas der Reduktionszone zugeführt und dort umgesetzt und gegebenenfalls nach einer Reinigung als Exportgas abzogen wird .

Es ist aus dem Stand der Technik, wie der AT 406 485 B, der WO 2010/006905 A1, der WO 2009/149862 A1 oder der EP 0 488 429 A2 bekannt, dass mittels Injektorgasen feinstteilchenförmige Stoffe, wie z.B. Kohlenstoffträger, durch Eindüsung in Schmelzaggregate eingebracht werden können. Derart können z.B. pulverförmige Kohlen mittels eines Injektorgases und einem Injektor z.B. in einen Hochofen oder auch in einen Einschmelzvergaser eingebracht werden. Nachteilig ist dabei, dass gesonderte Injektorgase wie Stickstoff, Luft oder Erdgas eingesetzt werden müssen, die das Inertgasvolumen im Prozess, insbesondere bei zusätzlicher interner Gasrückführung, erhöhen bzw. hohe Betriebskosten (für Erdgas, Strom) verursachen.

Weiters ist es bekannt aus der DE 10 2006 048 600 A1 und der DE 10 2006 048 601 A1 von CO2-befreites Exportgas in einen Einschmelzvergaser einzubringen, um so die Rezirkulationsmenge an Exportgas zu maximinieren.

Es ist daher eine Aufgabe der Erfindung ein Verfahren und eine Anlage zur Verfügung zu stellen, die derartige Nachteile beim Eintrag von feinstteilchenförmigen Kohlenstoffträgern vermeiden.

Diese Aufgabe wird durch das erfindungsgemäße Verfahren nach Anspruch 1 und durch die Anlage nach Anspruch 10 gelöst.

Durch das erfindungsgemäße Verfahren wird zumindest ein Teil des Exportgases, nach einer Abscheidung von CO₂ für den Eintrag von pulverförmigen Kohlenstoffträgern in die

Schmelzzone genutzt. Damit kann die Menge an Reduktionsgas, das als Topgas aus dem Reduktionsaggregat abgezogen wird und nach einer Reinigung als Exportgas vorliegt, reduziert bzw. der Anteil an Exportgas, das im Verfahren genutzt wird, gesteigert werden. Die Menge an Exportgas, die im Verfahren als Kreislaufgas verwendet wird, also erneut dem Verfahren zugeführt wird, kann ebenfalls reduziert werden, da anstelle eines bei konventionellen Verfahren üblichen Treibgases, wie z.B. Stickstoff, ein prozesseigenes Gas Einsatz findet, wodurch die im Kreislauf geführte Gasmenge verringert wird. Damit kann die für die Förderung des Exportgases im Verfahren benötigte Energie (z.B. Strom für Verdichtung) verringert werden, da wesentlich weniger Inertgasbestandteile in den Prozessgasen vorhanden sind und somit einen wesentlich geringeren Energieeinsatz für Verdichtung, Aufheizung und Abkühlung der Prozessgase erforderlich macht. Der Anteil an Exportgas, der nicht im Prozess genutzt werden kann, verringert sich ebenfalls, zudem können erhebliche Mengen an Injektorgas eingespart werden und damit die Betriebskosten einer Anlage zur Roheisenerzeugung reduziert werden. Als weiterer Vorteil wird das Reduktionsgas bzw. das Kreislaufgas nicht durch das Treibgas verunreinigt und damit auch nicht das Reduktionspotential reduziert. Darüber hinaus kann durch die Einbringung von Reduktionsgas, aus dem CO₂ abgeschieden wurde, als Treibgas der Energieeintrag über die Sauerstoffdüsen bzw. Windformen erhöht werden, wodurch Reduktionsmittel in Form von Koks oder Kohle eingespart werden können.

Gemäß einer vorteilhaften Ausgestaltung des erfindungsgemäßen Verfahrens wird das Produktgas in zumindest einer Mischkammer mit den pulverförmigen Kohlenstoffträgern, gegebenenfalls gemeinsam mit einem Fördergas, zusammengeführt und dann in die Schmelzzone eingebracht. Das Produktgas führt zu einer erheblichen Steigerung der Strömungsgeschwindigkeit, mit der die pulverförmigen Kohlenstoffträger in die Schmelzzone eingetragen werden. Die pulverförmigen Kohlenstoffträger können mittels eines Fördergases in die Mischkammer eingebracht werden. Durch Zufuhr des Produktgases werden die pulverförmigen Kohlenstoffträger beschleunigt und mit höherer Geschwindigkeit in die Schmelzzone eingetragen. Durch diese Erhöhung der Eindüsgeschwindigkeit können z.B. Blockierungen durch Schlacke oder Beschädigungen durch Roheisenspritzer vermieden werden. Über Druck und Produktgasmenge bzw. über die Fördergasmenge kann der Eintrag in die Schmelzzone gezielt gesteuert bzw. an die Betriebsparameter angepasst werden.

Nach einer besonders vorteilhaften Ausgestaltung des erfindungsgemäßen Verfahrens erfolgt der Eintrag des Produktgases und der pulverförmigen Kohlenstoffträger, gegebenenfalls gemeinsam mit einem Fördergas, in die Schmelzzone zusammen mit einem sauerstoffreichen Gas. Die pulverförmigen Kohlenstoffträger werden als Energieträger und zur Bildung von Reduktionsgas eingesetzt. Dazu ist es vorteilhaft unmittelbar beim Eintrag sauerstoffreiches Gas zuzusetzen, um so eine Verbrennung und somit einen Energieeintrag zu ermöglichen. Vorteilhaft ist es z.B. den in der Schmelzzone benötigten Heißwind bzw. mit Sauerstoff angereicherten Heißwind als sauerstoffreiches Gas vorzusehen und gemeinsam mit dem pulverförmigen Kohlenstoffträger und gegebenenfalls einem Fördergas in die Schmelzzone einzubringen.

Nach einer weiteren vorteilhaften Ausgestaltung des erfindungsgemäßen Verfahrens werden das Produktgas, die pulverförmigen Kohlenstoffträger, gegebenenfalls das Fördergas, und das sauerstoffreiche Gas gemeinsam zunächst in eine Windform oder in eine Sauerstoffdüse und dann in die Schmelzzone eingedüst. Windformen sind bei Hochöfen übliche Einrichtungen, über die heißes, insbesondere sauerstoffreiches, Gas in die Schmelzzone eingebracht werden kann. Sauerstoffdüsen sind Einrichtungen bei Schmelzreduktionsanlagen, welche sauerstoffhältiges Gas mit hohen O₂-Gehalten, bevorzugterweise über 90% O₂, in die Schmelzzone eines Schmelzaggregates, wie z.B. eines Einschmelzvergasers, einbringen. Diese sind zumeist ringförmig rund um die Schmelzzone angeordnet, sodass ein gleichmäßiger Eintrag des Gases erzielt wird. Vorteilhaft können die oben genannten Gase und die pulverförmigen Kohlenstoffträger gemeinsam in die Schmelzzone eindüst werden, wobei eine innige Vermischung der Gase mit den pulverförmigen Kohlenstoffträgern erfolgt.

Nach einer besonderen Ausgestaltung des erfindungsgemäßen Verfahrens wird das Exportgas vor der Behandlung in der CO₂-Abscheidungseinrichtung verdichtet und/oder gekühlt. Durch diese Maßnahmen können einerseits die für die CO₂-Abscheidung vorteilhaften Betriebsparameter eingestellt und andererseits Druck und Temperatur des Produktgases beeinflusst werden.

Gemäß einer geeigneten Ausgestaltung des erfindungsgemäßen Verfahrens wird das in der CO₂-Abscheidungseinrichtung abgeschiedene CO₂-reiche Gas als Tailgas abgeführt und, insbesondere gemeinsam mit Exportgas aus der Reduktionszone, zwischengespeichert. Das Tailgas weist eine zumeist stark schwankende Zusammensetzung auf, sodass auch dessen Heizwert nicht konstant ist. Durch die Zwischenspeicherung können die Eigenschaften des Tailgases ausgeglichen werden. Durch Zumischen von überschüssigem Exportgas, das nicht als Produktgas Verwendung findet, kann Exportgas gemeinsam mit Tailgas zunächst gespeichert und in weiterer Folge für externe Nutzungen, wie z.B. einer thermischen Verwertung zur Verfügung gestellt werden.

Gemäß einer vorteilhaften Ausgestaltung des erfindungsgemäßen Verfahrens werden/ wird das in der CO₂-Abscheidungseinrichtung abgeschiedene CO₂-reiche Gas als Tailgas und/oder Exportgas aus der Reduktionszone, zur Erwärmung des Produktgases, in einer Heizeinrichtung zumindest teilweise verbrannt. Durch die Verbrennung kann der Energieinhalt des Tailgases und/oder des Exportgases genutzt und somit eine kostengünstige Erwärmung des Exportgases erzielt werden. Das bei der Verbrennung entstehende Abgas wird abgeführt und gegebenenfalls einer Reinigung unterzogen.

Gemäß einer weiteren vorteilhaften Ausgestaltung des erfindungsgemäßen Verfahrens wird das erwärmte Produktgas in die Reduktionszone und/oder die Schmelzzone eingeleitet. Somit kann der Anteil an Exportgas, das im Verfahren verbleibt und als Kreislaufgas wieder in der Reduktionszone, in der Schmelzzone oder als Produktgas in der Schmelzzone genutzt werden kann, deutlich gesteigert werden.

Gemäß einer vorteilhaften Ausgestaltung des erfindungsgemäßen Verfahrens wird das aus der Reduktionszone abgezogene Reduktionsgas einer Trockenentstaubung und/oder einer Nassreinigung unterworfen. Da das abgezogene Reduktionsgas einen erheblichen Anteil an Staubfracht bzw. feine Feststoffpartikel aufweist, ist es vorteilhaft, zunächst eine Reinigung vorzusehen, wobei trockene oder nasse Reinigungsbehandlungen aber auch Kombinationen davon möglich sind. Das gereinigte abgezogene Reduktionsgas kann als Exportgas erfindungsgemäß genutzt oder weiteren Anwendungen, wie z.B. einer thermischen Verwertung, zugeleitet werden.

Die erfindungsgemäße Anlage zur Herstellung von Roheisen oder flüssigen Stahlvorprodukten umfasst ein Reduktionsaggregat, in dem metalloxidhältige, insbesondere eisenoxidhältige, Einsatzstoffe und gegebenenfalls Zuschlagsstoffe mittels eines Reduktionsgases zumindest teilweise reduziert werden können und ein Schmelzaggregat, in das die zumindest teilweise reduzierten Einsatzstoffe bzw. die Zuschlagstoffe eingebracht und unter Zufuhr von Kohlenstoffträgern, insbesondere Koks und/oder Kohle, und sauerstoffhältigem Gas und unter Bildung des Reduktionsgases erschmolzen werden können. Das im Schmelzaggregat gebildete Reduktionsgas kann der Reduktionszone zugeführt, dort umgesetzt und gegebenenfalls nach einer Reinigung als Exportgas abzogen werden. Die Anlage umfasst weiters eine CO₂-Abscheidungseinrichtung, zur Abscheidung von CO₂ aus dem Exportgas und zur Bildung eines Produktgases. Die CO₂-Abscheidungseinrichtung ist über eine Produktgasleitung mit zumindest einer Eintragvorrichtung zum Eintrag, insbesondere zur Eindüsung, von pulverförmigen Kohlenstoffträgern in das Schmelzaggregat verbunden. Durch die CO₂-Abscheidungseinrichtung kann CO₂ und bevorzugterweise auch restlicher Wasserdampf (H₂O), die für den Schmelzprozess bzw. die dabei ablaufende Reduktionsgaserzeugung und die Reduktion in der Reduktionszone nachteilig sind, abgeschieden werden, sodass ein hochwertiges Produktgas mit einem hohen Anteil an reduzierenden Komponenten wie Kohlenmonoxid (CO) und Wasserstoff (H₂) eingestellt wird. Pulverförmige Kohlenstoffträger fallen in großer Menge bei einer Vielzahl von metallurgischen Verfahren an, wie z.B. auch bei der Handhabung von stückigen Kohlen.

Die Möglichkeit derartige Kohlenstoffträger zu verarbeiten, stellt daher einen wesentlichen wirtschaftlichen Vorteil dar. Ebenso kann durch die erneute Nutzung des aus dem Reduktionsaggregat abgezogenen Reduktionsgases die Gesamteffizienz des Roheisenerzeugungsverfahrens verbessert werden, sodass z.B. die gesamte Menge an Kohlenstoffträger je Tonne erzeugtem Roheisen reduziert werden kann. Durch die Nutzung des Produktgases für den Eintrag von pulverförmigen Kohlenstoffträgern in das Schmelzaggregat ist es möglich, ohne das sonst übliche Injektionsgas, wie z.B. Stickstoff, Flüssiggas oder Erdgas, auszukommen. Damit wird aufgrund des niedrigeren Inertgasanteils die Menge an Prozessgas insgesamt reduziert, sodass auch kleinere Anlagen für die Gasbehandlung bzw. die Gasleitung möglich werden.

Gemäß einer alternativen Ausgestaltung der erfindungsgemäßen Vorrichtung weist die Eintragvorrichtung eine Mischkammer zum Mischen des Produktgases mit pulverförmigen Kohlenstoffträgern und gegebenenfalls Fördergas auf, wobei die Mischkammer mit der Produktgasleitung und einer Förderleitung zum Einfördern der pulverförmigen Kohlenstoffträger in Verbindung steht. Zunächst werden die pulverförmigen Kohlenstoffträger in die Mischkammer eingebracht, wobei dies z.B. mittels eines Fördergases oder auch durch Schwerkraft über die Förderleitung erfolgen kann. Durch den Zusatz des Produktgases über die Produktgasleitung wird die für den Eintrag nötige Eindüsgeschwindigkeit und - energie aufgebracht, sodass die pulverförmigen Kohlenstoffträger in das Schmelzaggregat eingetragen werden können. Durch die Mischkammer kommt es zu einer innigen Mischung zwischen dem Produktgas und den pulverförmigen Kohlenstoffträgern, sodass ein gleichmäßiger Eintrag ermöglicht wird.

Eine mögliche Variante der erfindungsgemäßen Vorrichtung sieht vor, dass die Eintragvorrichtung eine Eintragleitung aufweist, die die Mischkammer mit zumindest einer Düse verbindet. Durch die Düse kommt es zu einer erheblichen Erhöhung der Strömungsgeschwindigkeit, sodass auch das Eindüsen in einen Raum mit hohem Druck, wie es in üblichen Schmelzaggregaten der Fall ist, möglich ist. Zudem wird die innige Verwirbelung der pulverförmigen Kohlenstoffträger nochmals erhöht, sodass eine sehr homogene Verteilung im Schmelzaggregat ermöglicht wird. Durch das Vorsehen mehrerer Mischkammern und/oder mehrerer Düsen kann eine gleichmäßige Verteilung der pulverförmigen Kohlenstoffträger im Schmelzaggregat sichergestellt werden.

Gemäß einer besonders vorteilhaften Ausgestaltung der erfindungsgemäßen Vorrichtung weist die Eintragvorrichtung eine Versorgungsleitung zum Eintrag von sauerstoffhältigem Gas auf. Die pulverförmigen Kohlenstoffträger können gemeinsam mit dem sauerstoffhältigen Gas eingebracht werden, wobei eine unmittelbare Verbrennung der pulverförmigen Kohlenstoffträger und des Produktgases bzw. Vergasung der pulverförmigen Kohlenstoffträger bei Eintritt in das Schmelzaggregat erreicht wird.

Nach einer weiteren möglichen Ausgestaltung der erfindungsgemäßen Vorrichtung werden die Versorgungsleitung und die Eintragleitung in der Düse zusammengeführt. Die Düse bildet damit einen nahezu homogenen Düsenstrahl aus, der in das Schmelzaggregat eintritt. Damit es nicht nötig separate Einrichtungen für den Eintrag des sauerstoffhältigen Gases und für die pulverförmigen Kohlenstoffträger vorzusehen. Diese können zusammengefasst werden. Somit können für den Eintrag der pulverförmigen Kohlenstoffträger jene genutzt werden, die für den Eintrag des sauerstoffhältigen Gases ohnehin schon vorgesehen sind.

Nach einer besonders vorteilhaften Ausgestaltung der erfindungsgemäßen Vorrichtung ist die Düse eine Windform eines Hochofens oder eine Sauerstoffdüse eines Schmelzaggregates. Windformen dienen zum Eintrag von zumeist heißem Wind in das Schmelzaggregat. Sauerstoffdüsen sind Einrichtungen bei Schmelzreduktionsanlagen, welche sauerstoffhältiges Gas mit hohen O₂-Gehalten, bevorzugterweise über 90% O₂, in die Schmelzzone eines Schmelzaggregates einbringen. Dazu sind zumeist ringförmige Vorrichtungen vorgesehen, um einen möglichst gleichmäßigen Eintrag des Heißwindes zu ermöglichen. Anstelle von heißer Luft, ist es jedoch auch möglich sauerstoffreiches Gas, z.B. mit einem Sauerstoffgehalt >90%, in das Schmelzaggregat einzublasen. Damit können das sauerstoffreiche Gas und die pulverförmigen Kohlenstoffträger gemeinsam in das Schmelzaggregat eingedüst werden. Durch diese Ausgestaltung ist eine besonders effektive Umsetzung der pulverförmigen Kohlenstoffträger sichergestellt, sodass diese als Energieträger und zur Reduktionsgasbildung besonders gut genutzt werden können.

Nach einer vorteilhaften Ausgestaltung der erfindungsgemäßen Vorrichtung ist das Reduktionsaggregat als Schacht eines Hochofens oder als Reduktionsschacht oder als Wirbelschichtaggregat oder als eine Gruppe in Serie geschalteter Wirbelschichtaggregate und das Schmelzaggregat als unterer Teil eines Hochofens oder als Einschmelzvergaser ausgebildet. Damit kann eine sehr breite Gruppe von metalloxidhältigen bzw. eisenoxidhältigen Einsatzstoffen und Zuschlagstoffen verarbeitet werden, wobei das Reduktionsaggregat z.B. auf die Korngröße und Zusammensetzung der metalloxidhältigen bzw. eisenoxidhältigen Einsatzstoffe bzw. auf die Art der stückigen Kohlenstoffträger angepasst werden kann. Ebenso kann durch die Wahl des Schmelzaggregates die Anlage und das Verfahren genau auf die zu verarbeitenden metalloxidhältigen bzw. eisenoxidhältigen Einsatzstoffe abgestimmt werden.

Eine mögliche Variante der erfindungsgemäßen Vorrichtung sieht vor, dass in einer Topgasableitung zur Ableitung von Reduktionsgas aus dem Reduktionsaggregat eine

Reinigungseinrichtung, insbesondere eine Trockenreinigung und/oder eine Nassreinigung, vorgesehen ist. Durch die Reinigungseinrichtung wird die mit dem Reduktionsgas aus dem Reduktionsaggregat ausgetragene Staubfracht und z.B. feine Feststoffpartikel abgeschieden. Neben einer Trockenreinigung, wie z.B. Staubsack, Heißgaszyklon, Gewebefilter oder Heißgasfilter kann auch eine Nassreinigung, wie z.B. ein Ringspaltwäscher oder ein Venturiwäscher vorgesehen werden. Weiters ist auch eine Kombination obiger Reinigungsanlagen möglich. Das gereinigte, aus dem Reduktionsaggregat abgezogene Reduktionsgas kann als Exportgas erfindungsgemäß genutzt oder weiteren Anwendungen bzw. Verwertungen zugeführt werden.

Gemäß einer vorteilhaften Ausgestaltung der erfindungsgemäßen Vorrichtung ist die Reinigungseinrichtung mittels einer Exportgasleitung mit der CO₂-Abscheidungseinrichtung verbunden, wobei in der Exportgasleitung ein Verdichter und/oder zumindest ein Kühler angeordnet sind. Das Exportgas wird zunächst verdichtet und dann gekühlt, wobei auch ein wesentlicher Anteil an Wasserdampf (H₂O) kondensiert und ausgeschieden wird, sodass optimale Bedingungen für die CO₂-Abscheidung eingestellt werden können.

Nach einer vorteilhaften Ausgestaltung der erfindungsgemäßen Vorrichtung, ist eine Heizeinrichtung zur Erwärmung von Produktgas vor dessen Eintrag in das Reduktionsaggregat und/oder in das Schmelzaggregat vorgesehen, wobei die Heizeinrichtung durch die zumindest teilweise Verbrennung von Tailgas und/oder von Exportgas beheizt werden kann. Damit kann das Produktgas, das in das Schmelzaggregat und/oder in das Reduktionsaggregat eingebracht werden soll, thermisch entsprechend angepasst werden. Durch die Verbrennung von Tailgas bzw. von Exportgas in der Heizeinrichtung, kann das Produktgas besonders kostengünstig erwärmt werden. Über Leitungen, die die Heizeinrichtung mit dem Schmelzaggregat und mit dem Reduktionsaggregat verbinden, kann das erwärmte Produktgas eingeleitet werden. Die Einleitung in das Schmelzaggregat kann auch über die erfindungsgemäße Eintragvorrichtung erfolgen.

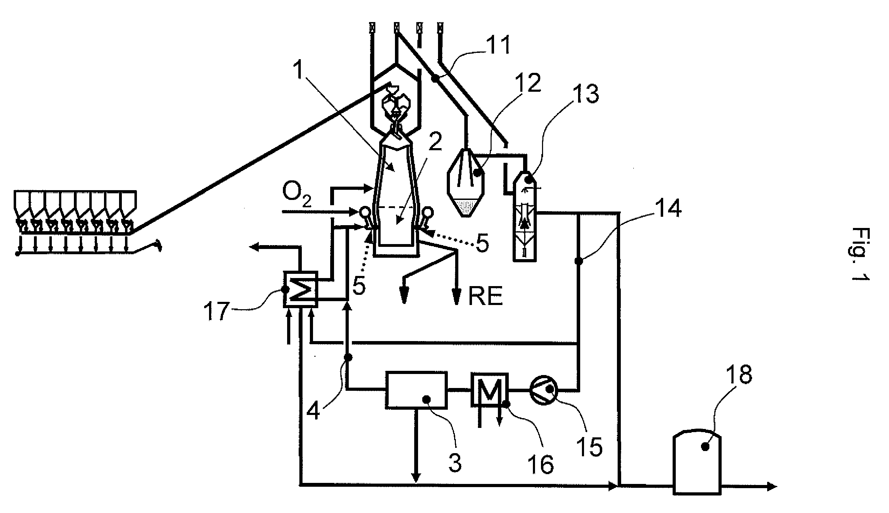

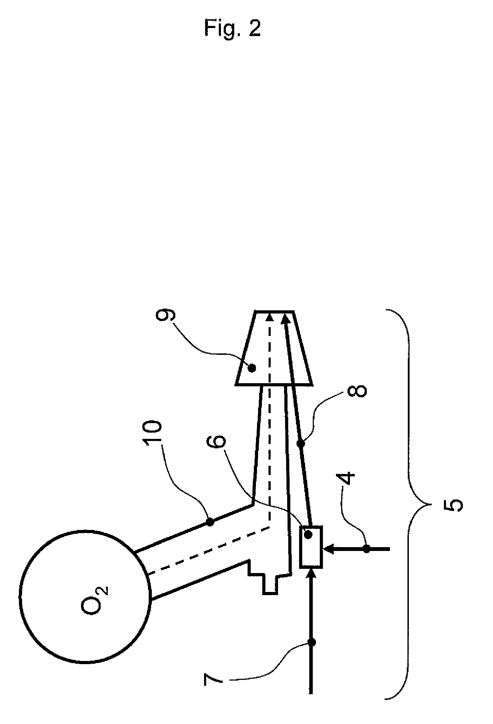

Im Folgenden wird die Erfindung beispielhaft und nicht einschränkend anhand der Figuren 1 und 2 näher erläutert.
- Fig. 1:: Erfindungsgemäße Anlage mit einem Hochofen
- Fig. 2:: Detail zur Eintragvorrichtung

Figur 1 zeigt die erfindungsgemäße Anlage mit einem Hochofen zur Herstellung von Roheisen RE. Der untere Teil des Hochofens bildet ein Schmelzaggregat 2 mit einer Schmelzzone und der Schacht des Hochofens ein Reduktionsaggregat 1 mit einer Reduktionszone. Das aus dem Reduktionsaggregat 1 abgezogene Reduktionsgas wurde bereits in der Reduktionszone umgesetzt. Das bedeutet, dass mittels des Reduktionsgases im Reduktionsaggregat 1 metalloxidhältige bzw. eisenoxidhältige Einsatzstoffe und gegebenenfalls Zuschlagsstoffe zumindest zum Teil reduziert werden können, wobei das verbrauchte Reduktionsgas als Topgas abgezogen wird. Die zumindest teilweise reduzierten metalloxidhältigen bzw. eisenoxidhältigen Einsatzstoffe werden in die Schmelzzone eingebracht, in der auch die Bildung des Reduktionsgases erfolgt.

Für eine weitere Nutzung des Topgases ist es zunächst zumeist nötig eine Gasreinigung vorzusehen. Diese kann vorteilhaft zweistufig, durch eine Trockenreinigung 12 und durch eine nachgeschaltete Nassreinigung 13 erfolgen. Diese Reinigungseinrichtungen sind in der Topgasableitung 11 angeordnet. Über eine Exportgasleitung 14 ist die Nassreinigung 13 mit einer CO₂-Abscheidungseinrichtung 3 verbunden. Diese kann z.B. im Druckwechsel- oder Vakuumdruckwechseladsorptionsverfahren betrieben werden. Zumeist werden in der Exportgasleitung 14 ein Verdichter 15 und diesem nachgeordnet eine Kühleinrichtung 16, wie z.B. ein Wasserkühler, vorgesehen, sodass die Temperatur des Exportgases für die CO₂-Abscheidung gezielt eingestellt und ein Großteil des im Exportgas enthaltenen Wasserdampfes kondensiert und abgeschieden werden kann. Bei der CO₂-Abscheidung wird ein CO₂-reiches Gas, das Tailgas, abgeschieden und ein Produktgas gebildet, das hohe Anteile an reduzierenden Komponenten wie z.B. Wasserstoff und Kohlenmonoxid aufweist.

Figur 2 zeigt die Eintragvorrichtung 5 im Detail. Das Produktgas kann über die Produktgasleitung 4 in zumindest eine Mischkammer 6 eingebracht werden. Über eine Förderleitung 7 werden pulverförmige Kohlenstoffträger, wie z.B. pulverförmige Kohle, mittels eines Fördergases, wie z.B. Stickstoff, in die Mischkammer 6 eingefördert und mittels des Produktgases über eine Eintragleitung 8 einer Düse 9 zugeführt. In die Düse 9 mündet auch die Versorgungsleitung 10, über die sauerstoffreiches Gas eingebracht werden kann. Damit werden das sauerstoffreiche Gas, das Fördergas, das Produktgas und die pulverförmigen Kohlenstoffträger gemeinsam in das Schmelzaggregat eingebracht bzw. eingedüst. Vorteilhaft kann eine Vielzahl an Düsen vorgesehen werden, die derart angeordnet sein können, dass Sie direkt in die Windform bzw. Sauerstoffdüse eines Schmelzaggregates, wie z.B. eines Hochofens, eindüsen.

Die Eintragleitung 8 kann als Eindüslanze ausgeführt sein, die auch die Mischkammer 6 umfassen kann. Weiters kann die Eintragleitung 8 auch als separater Eindüskanal ausgebildet sein, der in die Düse 9 mündet. Die Düse 9 kann eine Windform eines Hochofens oder eine Sauerstoffdüse eines Schmelzaggregates, wie z.B. ein Einschmelzvergaser, bilden.

Bevorzugt werden die Versorgungsleitung 10 und die Eintragleitung 8 an der Spitze der Eindüslanze, welche in die Windform oder in die Sauerstoffdüse ragt, oder an einem Eindüskanal in der Windform oder der Sauerstoffdüse zusammengeführt. Beide Ausgestaltungen nutzen die Windform bzw. die Sauerstoffdüse, die bekannte Einrichtungen darstellen, sodass das erfindungsgemäße Verfahren bzw. die Vorrichtung auch auf bestehenden Anlagen umgesetzt werden kann.

Zusätzlich kann eine Heizeinrichtung 17 vorgesehen werden, in der durch eine zumindest teilweise Verbrennung von Tailgas aus der CO₂-Abscheidungseinrichtung 3 und/oder von

Exportgas eine Erwärmung zumindest eines Teiles des Produktgases erfolgen kann. Dieses erwärmte Teil des Produktgases kann in das Reduktionsaggregat 1 oder in das Schmelzaggregat 2 eingebracht werden.

Überschüssiges Exportgas oder auch Tailgas kann in einem Gasspeicher 18 gespeichert werden, wobei ein Ausgleich der Zusammensetzung dieser Gase erfolgt. Dies ist nötig, da die Zusammensetzung des Tailgases aus einer Druckwechsel- oder Vakuumdruckwechseladsorptionsverfahren sehr stark schwankt, woraus auch starke Schwankungen des Heizwertes resultieren. Die Gasmischung kann in weiterer Folge für eine z.B. thermische Verwertung genutzt werden.

### Bezugszeichenliste

- 1: Reduktionsaggregat
- 2: Schmelzaggregat
- 3: CO₂-Abscheidungseinrichtung
- 4: Produktgasleitung
- 5: Eintragvorrichtung
- 6: Mischkammer
- 7: Förderleitung
- 8: Eintragleitung
- 9: Düse
- 10: Versorgungsleitung
- 11: Topgasableitung
- 12: Trockenreinigung
- 13: Nassreinigung
- 14: Exportgasleitung
- 15: Verdichter
- 16: Kühleinrichtung
- 17: Heizeinrichtung
- 18: Gasspeicher

## Patentansprüche

1. Verfahren zur Herstellung von Roheisen oder flüssigen Stahlvorprodukten, wobei metallhältige, insbesondere eisenoxidhältige, Einsatzstoffe und gegebenenfalls Zuschlagsstoffe in einer Reduktionszone mittels eines Reduktionsgases zumindest teilweise reduziert, in weiterer Folge in eine Schmelzzone eingebracht und unter Zufuhr von stückigen Kohlenstoffträgern, insbesondere Koks und/oder Kohle, und sauerstoffhältigem Gas und unter Bildung des Reduktionsgases erschmolzen werden, wobei das gebildete Reduktionsgas der Reduktionszone zugeführt und dort umgesetzt und gegebenenfalls nach einer Reinigung als Exportgas abzogen wird, **dadurch gekennzeichnet, dass** zumindest ein Teil des Exportgases in einer CO₂-Abscheidungseinrichtung unter Abscheidung von CO₂ und Bildung eines Produktgases behandelt wird, und zum Eintrag, insbesondere zum Eindüsen, von pulverförmigen Kohlenstoffträgern, gemeinsam mit einem Fördergas, in die Schmelzzone genutzt wird, wobei das Produktgas in zumindest einer Mischkammer mit den pulverförmigen Kohlenstoffträgern und dem Fördergas, insbesondere Stickstoff, zusammengeführt und dann in die Schmelzzone eingebracht wird, wobei die pulverförmigen Kohlenstoffträger mittels des Fördergases in die Mischkammer eingebracht werden.

2. Verfahren nach Anspruch 1 oder 2, **dadurch gekennzeichnet, dass** der Eintrag des Produktgases und den pulverförmigen Kohlenstoffträgern, gegebenenfalls gemeinsam mit einem Fördergas, in die Schmelzzone zusammen mit einem sauerstoffreichen Gas erfolgt.

3. Verfahren nach Anspruch 3, **dadurch gekennzeichnet, dass** das Produktgas, die pulverförmigen Kohlenstoffträger, gegebenenfalls das Fördergas, und das sauerstoffreiche Gas gemeinsam zunächst in eine Windform oder in eine Sauerstoffdüse und dann in die Schmelzzone eingedüst werden.

4. Verfahren nach einem der obigen Ansprüche, **dadurch gekennzeichnet, dass** das Exportgas vor der Behandlung in der CO₂-Abscheidungseinrichtung verdichtet und/oder gekühlt wird.

5. Verfahren nach einem der obigen Ansprüche, **dadurch gekennzeichnet, dass** das in der CO₂-Abscheidungseinrichtung abgeschiedene CO₂-reiche Gas als Tailgas abgeführt und, insbesondere gemeinsam mit Exportgas aus der Reduktionszone, zwischengespeichert wird.

6. Verfahren nach einem der obigen Ansprüche, **dadurch gekennzeichnet, dass** das in der CO₂-Abscheidungseinrichtung abgeschiedene CO₂-reich Gas als Tailgas und/oder Exportgas aus der Reduktionszone zur Erwärmung des Produktgases in einer Heizeinrichtung zumindest teilweise verbrannt werden/wird.

7. Verfahren nach Anspruch 7, **dadurch gekennzeichnet, dass** das erwärmte Produktgas in die Reduktionszone und/oder die Schmelzzone eingeleitet wird.

8. Verfahren nach einem der obigen Ansprüche, **dadurch gekennzeichnet, dass** das aus der Reduktionszone abgezogene Reduktionsgas einer Trockenentstaubung und/oder einer Nassreinigung unterworfen wird.

9. Anlage zur Herstellung von Roheisen oder flüssigen Stahlvorprodukten mit einem Reduktionsaggregat (1), in dem metallhältige, insbesondere eisenoxidhältige, Einsatzstoffe und gegebenenfalls Zuschlagsstoffe mittels eines Reduktionsgases zumindest teilweise reduziert werden können und mit einem Schmelzaggregat (2), in das die zumindest teilweise reduzierten Einsatzstoffe bzw. die Zuschlagstoffe eingebracht und unter Zufuhr von Kohlenstoffträgern, insbesondere Koks und/oder Kohle, und sauerstoffhältigem Gas und unter Bildung des Reduktionsgases erschmolzen werden können, wobei das gebildete Reduktionsgas dem Reduktionsaggregat zugeführt, dort umgesetzt und, gegebenenfalls nach einer Reinigung, als Exportgas abzogen werden kann, **dadurch gekennzeichnet, dass** eine CO₂-Abscheidungseinrichtung (3) zur Abscheidung von CO₂ aus dem Exportgas und zur Bildung eines Produktgases vorgesehen ist, wobei das Produktgas über eine Produktgasleitung (4) mit zumindest einer Eintragvorrichtung (5) zum Eintrag, insbesondere zur Eindüsung, von pulverförmigen Kohlenstoffträgern in das Schmelzaggregat (2) verbunden ist, wobei die Eintragvorrichtung (5) zumindest eine Mischkammer (6) zum Mischen des Produktgases mit pulverförmigen Kohlenstoffträgern und Fördergas aufweist, wobei die Mischkammer (6) mit der Produktgasleitung (4) und einer Förderleitung (7) zum Einfördern der pulverförmigen Kohlenstoffträger in Verbindung steht.

10. Anlage nach Anspruch 9, **dadurch gekennzeichnet, dass** die Eintragvorrichtung (5) eine Eintragleitung (8) aufweist, die die Mischkammer mit zumindest einer Düse (9) verbindet.

11. Anlage nach einem der Ansprüche 9 bis 10, **dadurch gekennzeichnet, dass** die Eintragvorrichtung (5) eine Versorgungsleitung (10) zum Eintrag von sauerstoffhältigem Gas aufweist.

12. Anlage nach Anspruch 10 oder 11, **dadurch gekennzeichnet, dass** die Versorgungsleitung (10) und die Eintragleitung (8) in der Düse (9) zusammengeführt werden.

13. Anlage nach einem der Ansprüche 10 bis 12, **dadurch gekennzeichnet, dass** die Düse (9) eine Windform eines Hochofens oder eine Sauerstoffdüse eines Schmelzaggregates (2) ist.

14. Anlage nach einem der Ansprüche 10 bis 13, **dadurch gekennzeichnet, dass** das Reduktionsaggregat (1) als Schacht eines Hochofens oder als Reduktionsschacht oder als Wirbelschichtaggregat oder als eine Gruppe in Serie geschalteter Wirbelschichtaggregate und das Schmelzaggregat (2) als unterer Teil eines Hochofens oder als Einschmelzvergaser ausgebildet sind.

15. Anlage nach einem der Ansprüche 9 bis 14, **dadurch gekennzeichnet, dass** in einer Topgasableitung (11) zur Ableitung von Reduktionsgas aus dem Reduktionsaggregat(1) eine Reinigungseinrichtung, insbesondere eine Trockenreinigung (12) und/oder eine Nassreinigung (13), vorgesehen sind/ist.

16. Anlage nach Anspruch 15, **dadurch gekennzeichnet, dass** die Reinigungseinrichtung mittels einer Exportgasleitung (14) mit der CO₂-Abscheidungseinrichtung (3) verbunden ist, wobei in der Exportgasleitung (14) ein Verdichter (15) und/oder zumindest ein Kühler (16) angeordnet sind/ist.

17. Anlage nach einem der Ansprüche 9 bis 16, **dadurch gekennzeichnet, dass** eine Heizeinrichtung (17) zur Erwärmung von Produktgas vor dessen Eintrag in das Reduktionsaggregat (1) und/oder in das Schmelzaggregat (2) vorgesehen sind/ist, wobei die Heizeinrichtung (17) durch die zumindest teilweise Verbrennung von Tailgas und/oder von Exportgas beheizt werden kann.

## Claims

1. Method for the production of pig iron or liquid steel semi-finished products, metal-containing, in particular iron oxide-containing, batch materials and, if appropriate, aggregates being at least partially reduced in a reduction zone by means of a reduction gas, subsequently being introduced into a smelting zone and being smelted along with the supply of lumpy carbon carriers, in particular coke and/or coal, and oxygen-containing gas and along with the formation of the reduction gas, the formed reduction gas being supplied to the reduction zone and reacted there and being drawn off, if appropriate after purification, as export gas, **characterized in that** at least part of the export gas is treated in a CO₂ separation device, along with the separation of CO₂ and the formation of a product gas, and is utilized for the introduction, in particular injection, of pulverulent carbon carriers, together with a conveying gas, into the smelting zone, the product gas being combined in at least one mixing chamber with the pulverulent carbon carriers and the conveying gas, in particular nitrogen, and then being introduced into the smelting zone, the pulverulent carbon carriers being introduced into the mixing chamber by means of the conveying gas.

2. Method according to Claim 1, **characterized in that** the introduction of the product gas and of the pulverulent carbon carriers, if appropriate together with a conveying gas, into the smelting zone takes place together with an oxygen-rich gas.

3. Method according to Claim 2, **characterized in that** the product gas, the pulverulent carbon carriers, if appropriate the conveying gas, and the oxygen-rich gas are injected together first into a tuyere or into an oxygen nozzle and then into the smelting zone.

4. Method according to one of the above claims, **characterized in that** the export gas is compressed and/or cooled before treatment in the CO₂ separation device.

5. Method according to one of the above claims, **characterized in that** the CO₂-rich gas separated in the CO₂ separation device is discharged as tail gas and is intermediately stored, in particular, together with export gas from the reduction zone.

6. Method according to one of the above claims, **characterized in that** the CO₂-rich gas separated in the CO₂ separation device, as tail gas, and/or export gas from the reduction zone are/is at least partially burnt in a heating device for the purpose of heating the product gas.

7. Method according to Claim 6, **characterized in that** the heated product gas is introduced into the reduction zone and/or the smelting zone.

8. Method according to one of the above claims, **characterized in that** the reduction gas drawn off from the reduction zone is subjected to a dry dedusting and/or wet purification.

9. Plant for the production of pig iron or liquid steel semi-finished products, with a reduction assembly (1), in which metal-containing, in particular iron oxide-containing, batch materials and, if appropriate, aggregates can be at least partially reduced by means of a reduction gas, and with a smelting assembly (2), into which the at least partially reduced batch materials or the aggregates can be introduced and smelted along with the supply of carbon carriers, in particular coke and/or coal, and oxygen-containing gas and along with the formation of the reduction gas, the formed reduction gas being capable of being supplied to the reduction assembly, reacted there and drawn off, if appropriate after purification, as export gas, **characterized in that** a CO₂ separation device (3) for separating CO₂ from the export gas and for forming a product gas is provided, the product gas being connected via a product gas line (4) to at least one introduction device (5) for the introduction, in particular injection, of pulverulent carbon carriers into the smelting assembly (2), the introduction device (5) having at least one mixing chamber (6) for mixing the product gas with pulverulent carbon carriers and conveying gas, the mixing chamber (6) being connected to the product gas line (4) and to a conveying line (7) for the inward conveyance of the pulverulent carbon carriers.

10. Plant according to Claim 9, **characterized in that** the introduction device (5) has an introduction line (8) which connects the mixing chamber to at least one nozzle (9).

11. Plant according to one of Claims 9 to 10, **characterized in that** the introduction device (5) has a supply line (10) for the introduction of oxygen-containing gas.

12. Plant according to Claim 10 or 11, **characterized in that** the supply line (10) and the introduction line (8) are merged in the nozzle (9).

13. Plant according to one of Claims 10 to 12, **characterized in that** the nozzle (9) is a tuyere of a blast furnace or an oxygen nozzle of a smelting assembly (2).

14. Plant according to one of Claims 10 to 13, **characterized in that** the reduction assembly (1) is designed as the shaft of a blast furnace or as a reduction shaft or as a fluidized bed assembly or as a group of series-connected fluidized bed assemblies, and the smelting assembly (2) is designed as the lower part of a blast furnace or as a melt-down gasifier.

15. Plant according to one of Claims 9 to 14, **characterized in that** a purification device, in particular dry purification (12) and/or wet purification (13), are/is provided in a top gas outlet line (11) for the outlet of reduction gas from the reduction assembly (1).

16. Plant according to Claim 15, **characterized in that** the purification device is connected by means of an export gas line (14) to the CO₂ separation device (3), a compressor (15) and/or at least one cooler (16) being arranged in the export gas line (14).

17. Plant according to one of Claims 9 to 16, **characterized in that** a heating device (17) for the heating of product gas before the introduction of the latter into the reduction assembly (1) and/or into the smelting assembly (2) is provided, the heating device (17) being capable of being heated as a result of the at least partial combustion of tail gas and/or of export gas.

## Revendications

1. Procédé de fabrication de fonte brute ou de préproduits liquides de l'acier, dans lequel des matières premières contenant du métal, en particulier contenant de l'oxyde de fer, et éventuellement des fondants sont introduits dans une zone de réduction à l'état au moins partiellement réduit au moyen d'un gaz de réduction, et par la suite dans une zone de fusion, et sont fondus avec apport de supports carbone en morceaux, en particulier du coke et/ou du charbon, et de gaz contenant de l'oxygène et avec formation du gaz de réduction, dans lequel le gaz de réduction formé est acheminé vers la zone de réduction et y est transformé et, éventuellement après un nettoyage, en est extrait sous forme de gaz exporté, **caractérisé en ce qu'**au moins une partie du gaz exporté est traitée dans un appareil de séparation de CO₂ avec séparation du CO₂ et formation d'un gaz-produit, et est utilisée, en commun avec un gaz de transport, pour un chargement, en particulier au moyen d'une introduction par buse, de supports carbone sous forme de poudre dans la zone de fusion, dans lequel le gaz-produit est combiné dans au moins une chambre de mélange avec les supports carbone sous forme de poudre et le gaz de transport, en particulier de l'azote, et est introduit ensuite dans la zone de fusion, dans lequel les supports carbone sous forme de poudre sont introduits dans la chambre de mélange au moyen du gaz de transport.

2. Procédé selon la revendication 1 ou 2, **caractérisé en ce que** le chargement du gaz-produit et des supports carbone sous forme de poudre, éventuellement en commun avec un gaz de transport, dans la zone de fusion a lieu en commun avec un gaz riche en oxygène.

3. Procédé selon la revendication 3, **caractérisé en ce que** le gaz-produit, les supports carbone sous forme de poudre, éventuellement le gaz de transport, et le gaz riche en oxygène sont introduits ensemble d'abord dans une tuyère à vent ou une buse à oxygène et ensuite dans la zone de fusion.

4. Procédé selon l'une quelconque des revendications précédentes, **caractérisé en ce que** le gaz exporté est condensé et/ou refroidi avant le traitement dans l'appareil de séparation de CO₂.

5. Procédé selon l'une quelconque des revendications précédentes, **caractérisé en ce que** le gaz riche en CO₂ séparé dans l'appareil de séparation de CO₂ est évacué sous forme de gaz de queue et est stocké temporairement, en particulier en même temps que le gaz exporté issu de la zone de réduction.

6. Procédé selon l'une quelconque des revendications précédentes, **caractérisé en ce que** le gaz riche en CO₂ séparé dans l'appareil de séparation de CO₂ est brûlé au moins partiellement dans un appareil chauffant sous forme de gaz de queue et/ou de gaz exporté issu de la zone de réduction en vue d'un réchauffage du gaz-produit.

7. Procédé selon la revendication 7, **caractérisé en ce que** le gaz-produit réchauffé est introduit dans la zone de réduction et/ou la zone de fusion.

8. Procédé selon l'une quelconque des revendications précédentes, **caractérisé en ce que** le gaz de réduction extrait de la zone de réduction est soumis à un dépoussiérage par voie sèche et/ou à une épuration par voie humide.

9. Installation destinée à la fabrication de fonte brute ou de préproduits liquides de l'acier avec une unité de réduction (1), dans laquelle des matières premières contenant du métal, en particulier contenant de l'oxyde de fer, et éventuellement des fondants peuvent être réduits au moins partiellement au moyen d'un gaz de réduction, et avec une unité de fusion (2) dans laquelle les matières premières au moins partiellement réduites resp. les fondants sont introduits et peuvent être fondus avec apport de supports carbone, en particulier du coke et/ou du charbon, et de gaz contenant de l'oxygène et avec formation du gaz de réduction, dans laquelle le gaz de réduction formé peut être acheminé vers l'unité de réduction, y être transformé et, éventuellement après une épuration, en être extrait sous forme de gaz exporté, **caractérisée en ce qu'**un appareil de séparation de CO₂ (3) destiné à une séparation du CO₂ à partir du gaz exporté et destiné à une formation d'un gaz-produit est prévu, dans laquelle le gaz-produit est relié par l'intermédiaire d'une conduite de gaz-produit (4) à au moins un dispositif de chargement (5) en vue d'un chargement, en particulier en vue d'une introduction par buse, de supports carbone sous forme de poudre dans l'unité de fusion (2), dans laquelle le dispositif de chargement (5) présente au moins une chambre de mélange (6) destinée au mélange du gaz-produit avec des supports carbone sous forme de poudre et le gaz de transport, dans laquelle la chambre de mélange (6) est en liaison avec la conduite de gaz-produit (4) et avec une conduite de transport (7) destinée au transport des supports carbone sous forme de poudre.

10. Installation selon la revendication 9, **caractérisée en ce que** le dispositif de chargement (5) présente une conduite de chargement (8) qui relie la chambre de mélange à au moins une buse (9).

11. Installation selon la revendication 9 ou 10, **caractérisée en ce que** le dispositif de chargement (5) présente une conduite d'alimentation (10) destinée au chargement du gaz contenant de l'oxygène.

12. Installation selon la revendication 10 ou 11, **caractérisée en ce que** la conduite d'alimentation (10) et la conduite de chargement (8) aboutissent dans la buse (9).

13. Installation selon l'une quelconque des revendications 10 à 12, **caractérisée en ce que** la buse (9) est une tuyère à vent d'un haut-fourneau ou une buse à oxygène d'une unité de fusion (2).

14. Installation selon l'une quelconque des revendications 10 à 13, **caractérisée en ce que** l'unité de réduction (1) est réalisée sous la forme d'une cuve d'un haut-fourneau ou sous la forme d'une cuve de réduction ou sous la forme d'une unité à lit fluidisé ou sous la forme d'un groupe d'unités à lit fluidisé commutées en série, et l'unité de fusion (2) est réalisée sous la forme d'une partie inférieure d'un haut-fourneau ou sous la forme d'un carburateur de fusion.

15. Installation selon l'une quelconque des revendications 9 à 14, **caractérisée en ce qu'**un appareil d'épuration, en particulier un épurateur par voie sèche (12) et/ou un épurateur par voie humide (13), est/sont prévu(s) dans une conduite de gaz de gueulard (11) en vue d'une dérivation du gaz de réduction issu de l'unité de réduction.

16. Installation selon la revendication 15, **caractérisée en ce que** l'appareil d'épuration est relié à l'appareil de séparation de CO₂ (3) au moyen d'une conduite de gaz exporté (14), dans laquelle un condenseur (15) et/ou au moins un refroidisseur (16) est/sont agencé (s) dans la conduite de gaz exporté (14).

17. Installation selon l'une quelconque des revendications 9 à 16, **caractérisée en ce qu'**un appareil de chauffage (17) destiné au réchauffage du gaz-produit avant son chargement dans l'unité de réduction (1) et/ou dans l'unité de fusion (2) est prévu, dans laquelle l'appareil de chauffage (17) peut être chauffé grâce à la combustion au moins partielle de gaz de queue et/ou de gaz exporté.
